# FASCICULE DE BREVET EUROPEEN

(11) **EP 2 551 571 B1**
(45) Date de publication et mention de la délivrance du brevet: **10.06.2015**
(21) Numéro de dépôt: 12178277.5
(22) Date de dépôt: 27.07.2012
(51) Int. Cl.: F16K 31/40, F15B 13/044

(54) **Dispositif d'électrovalve adapté pour être monté dans un circuit hydraulique**
Elektroventilvorrichtung geeignet für einen hydraulichen Kreis
Electrovalve system adapted for an hydraulic circuit

(30) Priorité: 29.07.2011 FR 1157004
(43) Date de publication de la demande: 30.01.2013
(73) Titulaire: JTEKT HPI, 94430 Chennevieres sur Marne (FR)
(72) Inventeur: Hugel, Sylvain, 77330 Ozoir La Ferriere (FR)
(74) Mandataire: Berger, Helmut

(56) Documents cités:
- FR-A1- 2 933 161
- GB-A- 2 033 053
- US-A- 6 073 652
- US-A1- 2009 050 222
- US-A1- 2010 294 380

## Description

L'invention concerne un dispositif d'électrovalve adapté pour être monté dans un circuit hydraulique notamment avec un vérin pour le levage et la descente d'une charge, du type cartouche à visser comprenant une embase électrique à solénoïde et une partie hydraulique comportant un corps de valve tubulaire pourvu d'orifices d'entrée et de sortie du fluide hydraulique et d'une voie interne de pilotage, un clapet de valve de fermeture et d'ouverture de la voie de communication, axialement mobile dans le corps de valve et un organe de pilotage de la valve, sous l'effet d'un solénoïde, mobile entre une position d'obturation de ladite voie et une position d'ouverture de cette voie (voir US 6073652)

L'invention a pour but d'intégrer en seule cartouche différentes fonctions basées sur des principes hydrauliques connus en améliorant la performance finale de l'électrovalve.

Pour atteindre ce but, le dispositif d'électrovalve selon l'invention est caractérisé en ce que le clapet de valve piloté et l'organe de pilotage sont configurés et intégrés dans le corps de valve de façon à constituer une section variable assurant une variation progressive avec le courant d'excitation du solénoïde, du débit du fluide hydraulique s'écoulant entre les orifices d'entrée et de sortie, et en ce qu'il comprend un tiroir de compensation à clapet intégré de façon à constituer un moyen de balance de pression assurant la constance du débit indépendamment de la pression de fluide à l'entrée de la valve.

Selon une caractéristique de l'invention, le dispositif d'électrovalve est caractérisé en ce que le corps de valve est monté dans la cavité d'un corps d'enveloppe à trois voies dont deux communiquent avec les orifices du corps de valve et dont la troisième sert au pilotage interne du tiroir de compensation.

Selon une autre caractéristique de l'invention, le dispositif d'électrovalve est caractérisé en ce que le clapet pilote est configuré et monté mobile entre le corps de valve et l'organe pilote de façon que, lorsque la valve est en position de travail par application d'un courant au solénoïde il se place sous l'effet d'un différentiel de pression, dans une position d'équilibre assurant que le débit d'écoulement du fluide hydraulique entre l'orifice d'entrée et l'orifice de sortie soit proportionnel au courant d'excitation.

Selon encore une autre caractéristique de l'invention, le dispositif d'électrovalve est caractérisé en ce que les pertes de charges que subit l'écoulement du fluide hydraulique entre l'orifice d'entrée et l'orifice de sortie à l'état de travail de la valve est faible de façon que la vitesse de descente de faibles charges se fasse à une vitesse relativement élevée.

Selon encore une autre caractéristique de l'invention, le dispositif d'électrovalve est caractérisé en ce que l'organe pilote est réalisé sous forme d'un pointeau d'ouverture et de fermeture d'un trou de siège pilote axial du clapet pilote débouchant dans l'espace entre les orifices d'entrée et de sortie et en ce que l'espace autour du coulisseau communique avec l'orifice d'entrée par un orifice radial dans le clapet et en ce que le clapet comporte une zone clapet coopérant avec un siège du corps de valve pour ouvrir ou fermer le passage d'ouverture de l'espace interne entre les orifices d'entrée et de sortie.

Selon encore une autre caractéristique de l'invention, le dispositif d'électrovalve est caractérisé en ce que le clapet pilote comprend au niveau de sa face frontale du côté de l'espace interne entre les deux orifices un embout dont un épaulement annulaire constitue la zone clapet et, en aval de cette zone, en direction de l'intérieur de l'espace intermédiaire, des fentes à travers lesquelles le fluide hydraulique s'écoule dans l'espace intermédiaire lorsque le clapet s'éloigne du siège du corps de valve à l'état de travail de la valve, la géométrie des fentes constituant un moyen du contrôle de la vitesse maximale de descente des charges.

Selon encore une autre caractéristique de l'invention, le dispositif d'électrovalve est caractérisé en ce que le pointeau pilote est mobile à l'encontre d'un moyen de rappel dont le choix constitue également une mesure de contrôle de la vitesse maximale de descente des charges.

Selon encore une autre caractéristique de l'invention, le dispositif d'électrovalve est caractérisé en ce que le tiroir de compensation est monté mobile dans le corps de valve à l'encontre d'un moyen de rappel, dans la direction de réduction du débit de l'orifice d'entrée à l'orifice de sortie et en ce que le tiroir est configuré et disposé de façon qu'il se positionne sous l'effet d'un différentiel de pression dans une position rendant le débit indépendant de la pression à l'orifice d'entrée.

Selon encore une autre caractéristique de l'invention, le dispositif d'électrovalve est caractérisé en ce que le différentiel de pression est établi par la pression régnant dans l'espace intermédiaire entre les orifices d'entrée et de sortie, agissant sur la face frontale interne du tiroir, et la pression à l'orifice d'entrée agissant sur la face frontale externe du tiroir et le ressort de rappel.

Selon encore une autre caractéristique de l'invention, le dispositif d'électrovalve est caractérisé en ce qu'il comprend un mécanisme de commande manuelle de la valve.

Selon encore une autre caractéristique de l'invention, le dispositif d'électrovalve est caractérisé en ce qu'il est adapté pour fonctionner en mode d'alimentation inverse, en l'absence de l'excitation du solénoïde, la valve étant alors complètement ouverte.

Selon encore une autre caractéristique de l'invention, le dispositif d'électrovalve est caractérisé en ce que, dans sa position fermée la valve assure une étanchéité de type clapet au niveau de clapet piloté, l'organe pilote en forme de pointeau pilote et des moyens de balance de pression à clapet intégré, qui accomplit une fonction de retenue de charges.

Selon encore une autre caractéristique de l'invention, le dispositif d'électrovalve est caractérisé en ce que les moyens de balance de pression à clapet intégré, sont disposés en aval de la section variable commandée proportionnellement et en ce que cette disposition des moyens de balance avec pilotage par canal interne permettent un passage d'écoulement de fluide hydraulique le plus libre possible entre les orifices d'entrée et de sortie.

Selon encore une autre caractéristique de l'invention, le dispositif d'électrovalve est caractérisé en ce que la section de passage précitée en coopération avec un choix de diamètre optimal du tiroir de compensation constitue un moyen d'optimisation de la perte de charges aux faibles charges en pression pour assurer la réalisation des conditions d'optimisation de la vitesse à vide dans les applications à levage et à descente de charges.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue en coupe axiale d'un dispositif d'électrovalve selon l'invention, monté dans un circuit hydraulique en position de repos ;
- la figure 2 est une vue à plus grande échelle du détail entouré du cercle II à la figure 1 ;
- la figure 3 est une vue à plus grande échelle du détail entouré du cercle III à la figure 1 ;

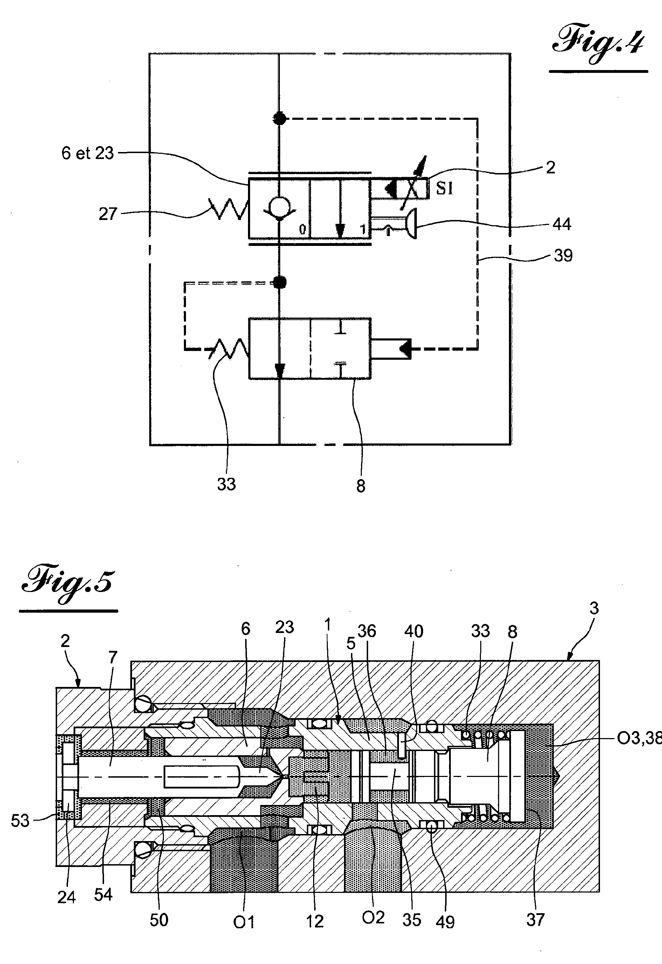

- la figure 4 donne le symbole hydraulique de la valve de la figure 1 ;
- la figure 5 montre à plus grande échelle la valve de la figure 1 à l'état de repos ;
- la figure 6 est une vue de la valve de la figure 5, mais en une vue en coupe angulairement décalée ;
- la figure 7 est une vue en coupe axiale du dispositif d'électrovalve selon la figure 1, mais montre celui-ci en position de travail ;
- la figure 8 montre la valve de la figure 7, à plus grande échelle ;
- la figure 9 est une vue en coupe du dispositif d'électrovalve selon la figure 1, mais montre celle-ci en position d'ouverture complète par action de la commande manuelle ;
- la figure 10 est une vue axiale du dispositif d'électrovalve sur la figure 1, mais montre l'électrovalve en position d'ouverture complète en alimentation inverse.
- les figures 11 et 12 sont deux schémas illustrant sous forme de courbe le débit de fluide hydraulique s'écoulant à travers la valve en fonction de la pression pour différents courants d'alimentation du solénoïde, respectivement pour des débits maximaux et des ressorts de compensation différents.

L'invention est relative à des électrovalves à clapet étanche et à commande électrique proportionnelle pour des applications oléo-hydrauliques, par exemple nécessaires au contrôle de la descente proportionnelle ou de retenue d'une charge, supportée par la fourche d'un chariot de manutention. La valve est montée dans le circuit hydraulique d'alimentation d'un vérin et doit donc assurer le contrôle du débit du fluide hydraulique.

En se référant aux figures, on constate que l'électrovalve hydraulique, représentée à titre d'exemple non limitatif comprend une valve 1 en cartouche à visser, réalisée sous forme d'une partie hydraulique vissée dans une embase électrique 2 (qui permet la fixation de l'électrovalve) et logée dans la cavité d'un corps d'enveloppe 3 montée elle-même sur l'embase 2 sur laquelle est disposé un solénoïde 4.

Sur les figures, les espaces en gris sombre sont des espaces remplis de fluide hydraulique haute-pression, les espaces en gris clair sont des espaces remplis de fluide hydraulique basse-pression et les espaces en gris intermédiaire sont des espaces remplis de fluide à pression intermédiaire.

Plus précisément, la valve 1 selon l'invention comporte un corps de valve tubulaire 5 pourvu d'orifices radiaux en communication avec les orifices O1 et O2 du corps d'enveloppe 3, un clapet pilote 6 monté axialement mobile dans le corps de valve 5, un pointeau pilote 7 axialement mobile dans le clapet pilote 6 et un tiroir de compensation 8 axialement mobile dans le corps de valve 5, dans la partie de valve opposée à celle logeant le clapet 6.

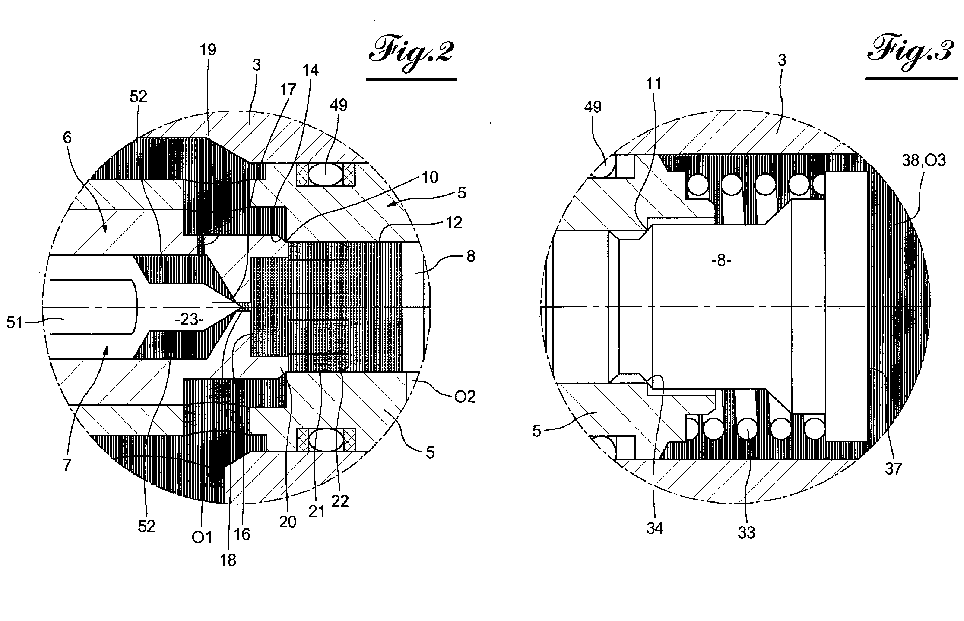

Comme le montre plus en détail la figure 2, le corps de valve 5 comprend un siège 10 et un siège 11 respectivement au contact du clapet pilote 6 et le tiroir de compensation 8, dans la position de repos de la valve, ainsi qu'un espace intérieur 12 constituant une voie de communication des orifices O1 et O2. Le clapet pilote 6 de forme tubulaire cylindrique et fermée à une extrémité par une paroi radiale 16 est pourvu d'une zone clapet 14 annulaire extérieure destinée à venir en contact avec le siège 10 du corps de valve 5, d'un siège pilote 17 pratiqué dans la paroi transversale 16 qui est percée au centre, au niveau de son axe longitudinal, par un trou de siège pilote axial 18, d'un orifice de pilotage radial 19, et, en saillie de la face de la paroi transversale, qui est opposée au siège 17, d'un embout annulaire cylindrique étagé 20. L'embout comprend deux portions de diamètres différents et axialement alignées dont la portion axialement extérieure libre 21 a un diamètre plus faible que l'autre portion. Dans cette portion 21 sont prévues des fentes axiales 22 configurées pour permettre une ouverture progressive de la section d'écoulement du fluide, dans l'espace libre 12, en fonction du déplacement axial du clapet, comme cela sera expliqué plus loin. C'est la zone de transition entre les deux portions de l'embout qui est configurée pour former la zone clapet susmentionnée 14. L'embout 20 s'étend donc dans l'espace 12 entre les deux orifices d'entrée 01 et 02 et constitue la voie de communication de ces deux orifices.

Le pointeau pilote 7 est axialement mobile dans le clapet pilote 6 et comporte à une extrémité une pointe 23 qui coopère avec le siège 17 du clapet pilote 6 et est configurée pour pouvoir obturer le trou de siège pilote 18 lorsque la valve se trouve dans sa position de repos. A son extrémité opposée, le pointeau 7 est axialement solidarisé par une collerette 24 au noyau plongeur 25. Celui-ci est axialement mobile dans l'embase électrique 2 à l'encontre d'un ressort de compression 27 sous l'effet du champ magnétique produit par le solénoïde 4 lorsque celui-ci est excité par l'écoulement d'un courant électrique. Le noyau est engagé dans une cavité axiale cylindrique borgne 29 de l'embase. Le ressort 27 prend appui par une extrémité contre la face de fond 30 de la cavité, tandis que son autre extrémité est en appui contre le noyau.

Une entretoise 32 de limitation de la course du clapet pilote 6 est interposée coaxialement entre une face d'appui de l'embase et le clapet pilote.

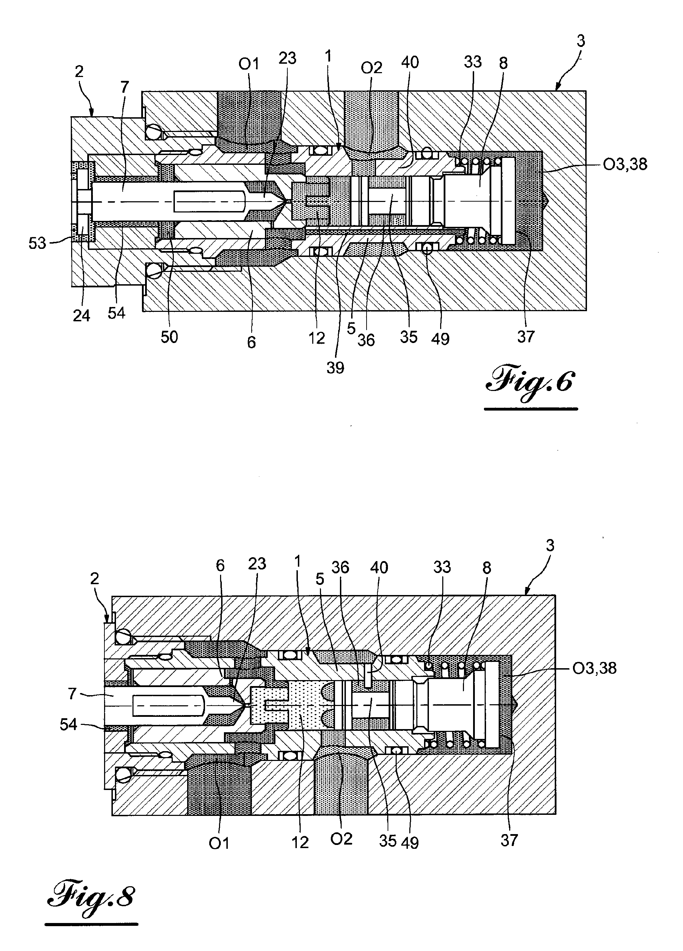

Comme le montre plus en détail la figure 3, le tiroir de compensation 8 de forme générale cylindrique est monté axialement mobile dans le corps de valve 5, à l'encontre d'un ressort de compression 33 s'opposant à un mouvement du tiroir en direction du corps de valve 5. Le tiroir comprend une zone de clapet annulaire 34 qui est formée par une zone de transition de diamètre différent constituant un épaulement extérieur annulaire, et est destinée de venir en contact étanche avec le siège 11 du corps de valve, lorsque la valve occupe sa position de repos. Le tiroir est pourvu, du côté de son extrémité interne, d'un rétrécissement diamétral cylindrique 35, qui délimite avec le corps de valve une chambre annulaire 36. La face frontale extérieure 37 du tiroir est en regard du fond de la cavité du corps d'enveloppe, qui loge la cartouche. La chambre 38 ainsi formée constitue un troisième orifice 03 et communique avec l'orifice 01 par un canal axial 39 pratiqué dans le corps de valve, comme le montre la figure 6.

On constate encore que le tiroir de compensation 8 est pourvu d'un pion d'arrêt 40 qui traverse radialement le corps de valve et s'engage dans la chambre 36. Ce pion est optionnel et permet de rendre solidaire de la cartouche le tiroir 8 lorsque la cartouche n'est pas montée dans le corps enveloppe 3. L'arrêt pourrait aussi se faire de toute autre manière appropriée.

Le dispositif de valve est équipé d'un mécanisme de commande manuel 44 qui comprend une tige de commande 45 pourvue à son extrémité extérieure d'un bouton de commande manuel 46 composé d'un système d'accroche de la tige et d'un réglage en position par rapport à l'embase électrique. La tige s'étend coaxialement à travers l'embase 2 et le noyau plongeur 25. Son extrémité interne 47 en forme de collerette est axialement solidarisable du noyau de façon qu'une force de traction exercée sur le bouton 46 puisse déplacer le noyau à l'encontre du ressort de rappel 27 et produire ainsi le même effet que l'excitation du solénoïde. Des joints permettent de réaliser l'étanchéité avec le milieu extérieur de ce dispositif de commande manuelle.

Il est encore à noter que le dispositif de valve comporte un ensemble de joints et de bagues anti-extrusion indiqués par la référence 49.

Après la description des caractéristiques constructives des composants du dispositif de valve selon l'invention, qui déterminent la configuration de ces composants, il convient d'invoquer certaines caractéristiques constructives, qui sont prévues pour assurer la répartition du fluide hydraulique dans le dispositif, tel qu'il est illustré sur les figures. Sur celles-ci, les espaces remplis de liquide sous pression, c'est-à-dire en communication avec l'orifice d'entrée 01 constituant alors l'orifice d'entrée haute pression de la valve sont indiqués par des points en forte densité et les espaces remplis de liquide basse pression, c'est-à-dire de retour au réservoir et en communication avec l'orifice O2 constituent alors l'orifice de sortie sont caractérisés par des points en faible densité. La zone de pression intermédiaire est indiquée par des points en densité intermédiaire.

Pour que le fluide hydraulique sous pression puisse parvenir dans l'espace annulaire 50 entre le clapet pilote 6 et l'entretoise, le pointeau pilote 7 de forme cylindrique est pourvu d'au moins un méplat axial 51 qui assure la communication entre la chambre 50 et l'espace annulaire 52 autour de la pointe 23 du pointeau.

L'espace 53 entre le pointeau et le noyau plongeur est en communication avec l'espace 50 par un jeu approprié entre la face interne 54 de l'entretoise 32 et le pointeau. Le noyau comporte un canal axial 55 qui relie l'espace 53 et l'espace 29 entre le fond de la cavité d'embase et l'extrémité arrière du noyau.

On décrira ci-après le fonctionnement du dispositif de valve selon l'invention.

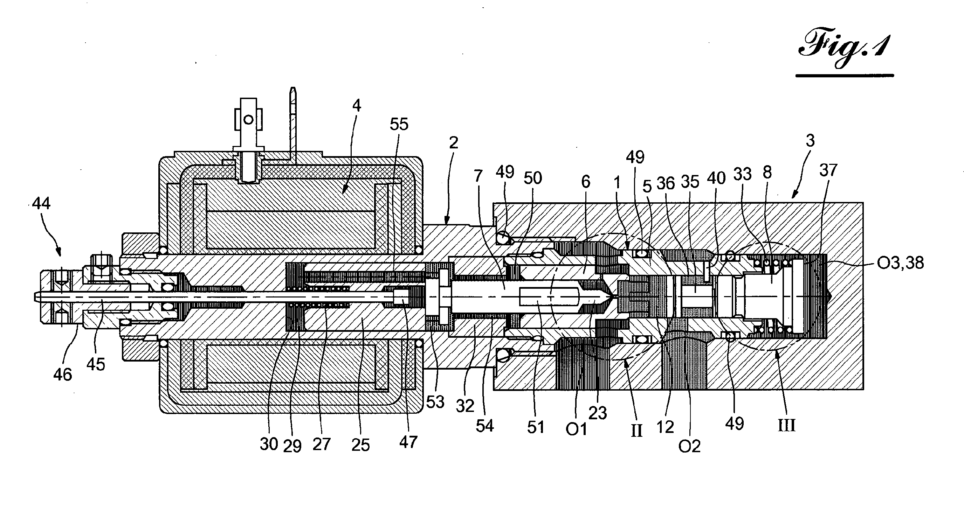

Sur la figure 1, la valve est représentée dans sa position de repos, c'est-à-dire le solénoïde n'est pas excité. L'orifice O1 est relié à une charge, par exemple la chambre d'un vérin simple effet permettant l'élévation des fourches d'un élévateur. L'orifice O1 est donc l'orifice d'entrée haute-pression. L'orifice O2 est relié à la basse pression, c'est-à-dire au réservoir du système hydraulique. L'écoulement doit donc se faire de l'orifice O1 à l'orifice O2.

Dans cette position de repos, le ressort de rappel 27 du noyau plongeur pousse la pointe 23 du pointeau pilote 7 contre le trou siège pilote 18 du clapet pilote 6 et obture celui-ci. Le clapet lui-même se positionne en appui sur le siège 10 du corps de valve 5 sous l'effet conjugué de la pression différentielle produite par la pression à l'orifice haute-pression O1 et la pression plus faible à l'orifice basse-pression O2, d'une part, et l'effort mécanique du ressort de rappel 27. Dans ces conditions il n'y a pas de communication directe entre les orifices O1 et O2. Ces orifices sont donc séparés, d'une façon étanche, par le contact étanche de type clapet entre le pointeau pilote et le clapet pilote et par le contact étanche de type clapet entre le clapet pilote et le corps de valve. Par contre il existe une liaison via le canal interne 58 entre l'orifice O1 et l'orifice O3 pour le pilotage de la balance de pression. Ainsi, la haute-pression régnant à l'orifice O1 peut s'exercer sur la face frontale large 37 du tiroir de compensation 8. Pour une pression à l'orifice O1 supérieure à la pression de pilotage de la balance de pression définie par le ressort de compensation 33 entre le corps de valve 5 et le tiroir de compensation 8, typiquement comprise entre 4 et 12 bar, le tiroir de compensation sous l'effet de la pression à l'orifice O3 qui est égal à la pression à l'orifice O1 et par la pression à l'orifice O2, se déplace vers l'intérieur du corps de valve en comprimant le ressort de compensation 33 et vient en appui sur le siège 11 du corps de valve en réalisant ainsi une étanchéité de type clapet entre l'orifice O3 et l'orifice O2.

En conclusion, en position de repos, il y a étanchéité de type clapet entre l'orifice O1 qui constitue l'orifice d'entrée haute-pression et l'orifice 02 qui constitue l'orifice de sortie relié au réservoir basse-pression. Cette étanchéité assure une retenue de la charge sur l'orifice O1.

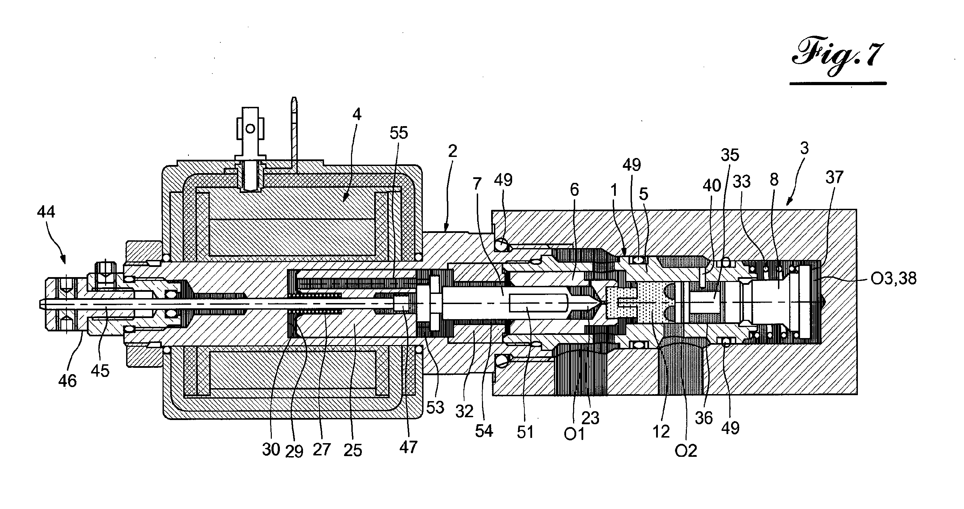

On décrira ci-après en se référant aux figures 7 et 8 le fonctionnement du dispositif de valve selon l'invention dans la position de travail de la valve, c'est-à-dire lorsque le solénoïde est excité.

L'écoulement d'un courant électrique dans le solénoïde engendre une force électromagnétique, proportionnelle au courant, qui provoque le déplacement du noyau plongeur 25 vers l'intérieur de l'embase 8, à l'encontre du ressort de rappel 27. Etant donné que le noyau et le pointeau pilote 7 sont solidaires en mouvement axial, le déplacement du noyau a pour conséquence un déplacement du pointeau, qui, via la loi linéaire du ressort 27, est proportionnelle au courant appliqué au solénoïde.

En se déplaçant en arrière, c'est-à-dire vers la gauche sur les figures, la pointe 23 du pointeau découvre alors le trou de siège pilote 18 du clapet pilote, ce qui permet un écoulement pilote de fluide hydraulique haute-pression, de l'espace 52 autour de la pointe 23, qui est en communication avec l'orifice O1 par le trou de pilotage 19 et par le trou de siège pilote 18 vers l'orifice O2. Cet écoulement pilote crée un différentiel de pression sur le clapet pilote 6, qui a pour conséquence d'amener celui-ci à suivre le pointeau pilote 7 qui se sépare alors du siège de clapet 10. Ce recul du clapet permet l'écoulement de fluide haute-pression de l'orifice O1 vers l'orifice O2 à travers les rainures axiales 21 à la périphérie du clapet. Il se crée alors à l'intérieur de l'espace interne 12 entre les deux orifices une pression intermédiaire réduite par rapport à la pression à l'orifice O1 par les pertes de charges que subit le fluide en s'écoulant dans l'espace interne.

En étant exposé à une pression différentielle, comme cela ressort des figures, le clapet se positionne dans une position d'équilibre. En effet, la pression différentielle tend à amener le clapet à suivre le pointeau. Mais, en s'engageant à nouveau sur la pointe du pointeau et en allant obturer son trou de siège pilote, le clapet tend à annuler le différentiel de pression, ce qui a pour conséquence de provoquer son déplacement inverse.

En conséquence le clapet pilote a lui aussi un déplacement proportionnel au courant de commande. Les fentes 21 se découvrant proportionnellement au courant de commande créent ainsi une section d'écoulement variable et progressive entre l'orifice O1 et l'espace intérieur en communication avec l'orifice O2.

Le débit de l'écoulement du fluide de l'orifice O1 vers l'orifice O2 est régulé proportionnellement au courant de commande appliqué au solénoïde, comme cela vient d'être démontré.

Or, ce débit est régulé indépendamment de la pression d'entrée à l'orifice O1, grâce au tiroir de compensation 8. En effet, le tiroir offre un passage normalement ouvert à travers les orifices du corps de valve 6 en direction de l'orifice O2. Le tiroir de compensation est en équilibre, d'un côté par la pression avale dans l'espace interne entre les deux orifices et la force de rappel du ressort de compensation 33, et, de l'autre côté, la pression régnant dans l'orifice O3 en communication avec l'orifice O1 par le canal interne 39 (figure 6).

Par cet équilibre, le tiroir de compensation pour une section donnée, donc pour un courant de commande donné, assure la constance du débit indépendamment de la pression d'entrée, à l'orifice O1. En effet, une augmentation de pression d'entrée tend à augmenter le débit à travers la section variable de l'écoulement dans l'espace interne. Mais une augmentation de débit augmenterait aussi le différentiel de pression amont-aval sur le tiroir et contraindrait alors celui-ci à se déplacer dans le sens de la diminution de la section d'écoulement et donc de la diminution du débit. Cette diminution de pression aurait alors l'effet inverse et irait dans le sens de l'augmentation du débit. Ces deux effets contradictoires forcent donc le tiroir d'adopter une position assurant un débit constant quelque soit la pression.

Il est à noter que la loi selon laquelle le débit est régulé est paramétrable par le choix du nombre, de la forme et de la position des fentes 21 en bout du clapet. Le débit maximum peut être limité mécaniquement par une limitation physique de la course du clapet par l'entretoise entre le clapet et l'embase électrique.

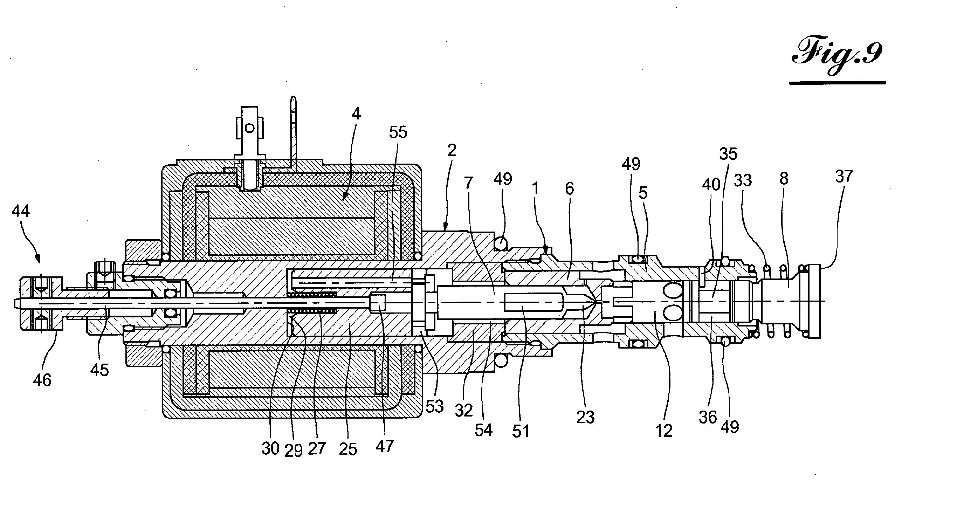

En se reportant à la figure 9, on constate que le dispositif selon l'invention est conçu pour être actionné manuellement. Le dispositif selon l'invention est pourvu d'un mécanisme de commande manuelle 44. En effet, par actionnement du bouton de commande 46, il est possible de réaliser manuellement la même action que déclenche la commande électromagnétique par alimentation du solénoïde, à savoir l'ouverture et la fermeture progressive de la valve. Comme le montre la figure 9, en tirant la tige 45 à l'aide du bouton 46, on provoque dès que la collerette 47 à l'extrémité interne de la tige vient en appui contre le noyau plongeur le mouvement en arrière de celui-ci et le retrait du pointeau pilote.

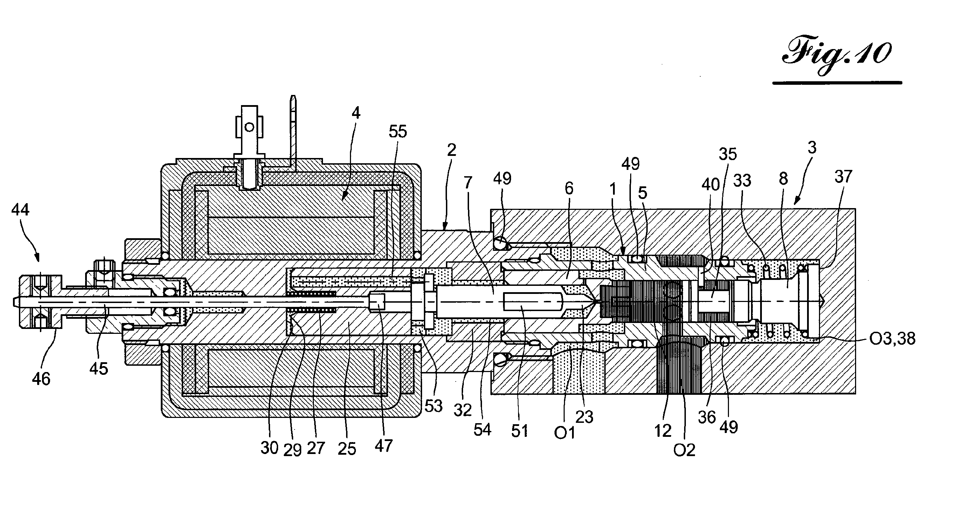

En se référant maintenant à la figure 10, on décrira ci-après le fonctionnement du dispositif selon l'invention en mode d'alimentation inverse des deux orifices, en l'absence de l'excitation du solénoïde. La figure montre que dans le mode d'alimentation inverse, la valve est complètement ouverte.

Dans ce mode d'alimentation inverse, c'est l'orifice O2 qui constitue l'orifice d'entrée haute-pression tandis que l'orifice O1 constitue l'orifice de sortie basse pression. Le passage de l'orifice O2 à l'orifice O1 est totalement libre. En effet, le faible recouvrement des orifices du corps de valve, côté orifice O2, par le tiroir de compensation 8 en position fermée, (à savoir en position de maintient de charge par exemple) permet instantanément lors de l'application du débit à l'orifice O2 de transmettre la pression sur la face interne du tiroir qui, puisque cette pression est supérieure à la pression à l'orifice O1, moins l'effort du ressort 33 qui tend aussi à ouvrir le passage entre les deux orifices, permettra l'ouverture complète de la voie d'écoulement de l'orifice O2 à l'orifice O1. Cette pression s'applique aussi sur le clapet 6 dont le trou de siège pilote est obturé par le pointeau pilote 7. Sous l'effet de la pression l'ensemble clapet pilote / pointeau pilote va réguler jusqu'à l'ouverture complète, avec pour seule force en opposition, l'effort de rappel du ressort 27. Il en découle une faible perte de charge pour l'écoulement de l'orifice O2 vers l'orifice O1. Dans ce sens de passage le débit est libre et non régulé.

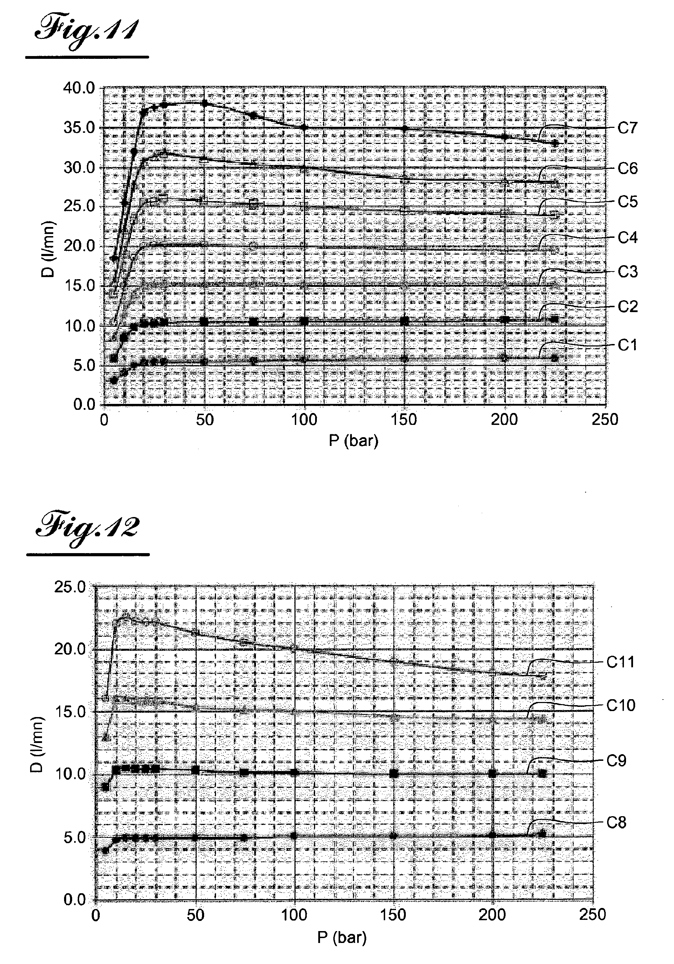

Les figures 11 et 12 illustrent sous forme de courbes les propriétés particulières et avantageuses que procure l'invention en donnant, chacune pour un débit maximum et un ressort de compensation spécifique, le débit D en fonction de la pression P pour différentes valeurs de courant.

La figure 11 représente sept courbes caractéristiques, chacune avec, pour paramètre, un courant d'excitation spécifique, l'évolution du débit en 1/min en fonction de la pression en bar, pour un débit maximal de 351/min et un ressort de 1daN/mm. Les sept courants d'excitation notés C1 à C7 ont les valeurs suivantes : C1=0,320A; C2=0,430A; C3=0,510A; C4=0,550A; C5=0,700A ; C6=0,900A et C7=1200A.

La figure 12 montre quatre courbes pour un débit maximal de 171/min et un ressort de 0,5daN/mm, donc un débit maximal plus faible. Les quatre courbes ont les paramètres de courant suivants : C8=0,570A; C9=0,400A ; C10=0,750A et C11=1100A.

On constate sur la figure 11 que le débit est contant ou diminue légèrement avec l'augmentation de la pression, après une zone initiale de 0 à environ 20 à 30 bars dans laquelle le débit augmente fortement avec la pression. La faible descente du débit est plus marquée lorsque le courant d'excitation appliquée au solénoïde augmente.

La comparaison des figures 11 et 12 montre que la zone initiale d'accroissement du débit est plus faible lorsque le débit maximal est plus faible. Dans le cas de la figure 12, le débit est constant ou descendant en fonction d'une augmentation de la pression à partir d'une pression de seulement 10 bars, alors que, dans le cas de la figure 11, cette pression est de 20 à 30 bars.

Les courbes des figures 11 et 12 confirment donc que le dispositif de valve selon l'invention permet d'obtenir que le débit soit sensiblement constant ou diminue légèrement malgré une augmentation de la pression, c'est-à-dire est indépendante de la charge.

Les figures confirment également que le débit augmente progressivement avec le courant d'excitation du solénoïde.

Il ressort de la description de l'invention, qui précède et est donnée à titre d'exemple non limitative, que l'invention est relative à une valve multifonction comprenant deux voies utiles, à savoir les orifices O1 et O2, et montée dans une cavité trois voies dont l'une, à savoir l'orifice O3 sert au pilotage interne de la balance de pression. Cette valve regroupe en une seule et même cartouche les fonctions suivantes :
- fonction 1 : lorsque la bobine n'est pas excitée, le débit est bloqué en voie d'entrée de manière étanche (fuite nulle) pour réaliser une retenue de charge ;
- fonction 2 : la gestion d'une ouverture progressive de la valve permet une variation du débit de zéro en position fermée à débit maximum à l'ouverture maximale ;
- fonction 3 : l'intégration d'un dispositif comprenant une section variable proportionnelle et une balance de pression, à savoir le clapet pilote 6 et le tiroir de compensation 8, permet de rendre le débit proportionnel à l'ouverture, indépendamment de la pression en entrée ;
- fonction 4 : le débit maximum en pleine ouverture est calibrable mécaniquement à la demande ;
- fonction 5 : la commande de l'ouverture est proportionnelle au courant d'alimentation du solénoïde ;
- fonction 6 : en l'absence de courant, le dispositif prévoit une commande manuelle permettant de réaliser l'ouverture ou la fermeture par exemple principalement pour une utilisation en commande de secours, de la même manière que l'invention prévoit un passage libre entre les deux orifices en sens inverse, de la voie O2 (normalement de sortie) vers la voie O1 (normalement d'entrée) avec solénoïde non excité.

On retient que l'application principale mais non exclusive de la valve selon l'invention est le contrôle de la descente d'une charge appliqué sur un vérin hydraulique simplet effet du type levage. La valve montée en dérivation ou en ligne permet le blocage de la charge en position, le contrôle progressif de la vitesse de descente pour des approches lentes et le contrôle de la vitesse maximale de descente en pleine ouverture.

L'invention atteint aussi son objectif d'une réalisation technique permettant l'optimisation des fonctions sur l'application typique qui vient d'être citée dans le sens :
- de la compacité de l'intégration sur une centrale hydraulique par l'aspect multifonction en une seule cartouche ;
- l'optimisation de la vitesse de descente à vide de faibles charges et selon une courbe caractéristique débit / pression légèrement descendante, ce qui assure une sécurisation de la fonction puisqu'un accroissement de la vitesse de descente avec la charge est exclu. La particularité de la balance de pression offre un passage libre et optimise les sections de passage vide tout en créant une pente légèrement descendante du débit avec la pression ;
- une construction permettant une adaptation de la valve par un ajustement de la courbe de progressivité à l'ergonomie d'un dispositif de levage et de ses organes de commande ainsi qu'une limitation du débit maximum, donc un contrôle de la vitesse maximale de descente adaptable pour chaque application, par modification de la géométrie des fentes d'ouverture du clapet ainsi que par le choix du ressort de compensation en charge sans remettre en cause le concept de la fonctionnalité de la valve avec un coût maîtrisé pour les volumes séries relatives à ce type d'application.

Toutes ces caractéristiques avantageuses de l'invention sont essentielles pour permettre au dispositif de valve selon l'invention de répondre à l'ensemble du marché manutention-levage dont les besoins sont différents en terme de débit maximal et d'ergonomie de progressivité par rapport aux organes de commande différents utilisés.

## Revendications

1. Dispositif d'électrovalve adapté pour être monté dans un circuit hydraulique avec un vérin pour le levage et la descente d'une charge, du type cartouche à visser comportant une embase électrique à solénoïde et une partie hydraulique comprenant un corps de valve tubulaire (5) pourvu d'orifices d'entrée et de sortie du fluide hydraulique et d'une voie interne de pilotage, un clapet pilote de valve (6) de fermeture et d'ouverture de la voie de communication, axialement mobile dans le corps de valve, et un organe de pilotage (7) de la valve, sous l'effet d'un solénoïde, qui est mobile entre une position d'obturation de ladite voie et une position d'ouverture de celle-ci, le clapet pilote de valve (6) et l'organe de pilotage (7) étant configurés et intégrés dans le corps de valve (5) de façon à constituer une section variable à fermeture étanche assurant une variation progressive avec le courant d'excitation du solénoïde (4), du débit du fluide hydraulique s'écoulant entre les orifices d'entrée (O1) et de sortie (O2), **caractérisé en ce qu'**il comprend un tiroir de compensation (8) à clapet qui est intégré de façon à constituer un moyen de balance de pression assurant la constance du débit indépendamment de la pression de fluide à l'entrée de la valve.

2. Dispositif d'électrovalve selon la revendication 1, **caractérisé en ce que** le corps de valve (5) est monté dans la cavité d'un corps d'enveloppe (3) à trois voies dont deux communiquent avec les orifices (O1, O2) du corps de valve (5) et dont la troisième sert au pilotage interne du tiroir de compensation (8).

3. Dispositif d'électrovalve selon la revendication 1 ou 2, **caractérisé en ce que** le clapet pilote (6) est configuré et monté mobile entre le corps de valve (5) et l'organe pilote (7) de façon que, lorsque la valve est en position de travail par application d'un courant au solénoïde (4) il se place sous l'effet d'un différentiel de pression, dans une position d'équilibre assurant que le débit d'écoulement du fluide hydraulique entre l'orifice d'entrée (O1) et l'orifice de sortie (O2) soit proportionnel au courant d'excitation.

4. Dispositif d'électrovalve selon l'une des revendications 1 à 3, **caractérisé en ce que** l'organe pilote (7) est réalisé sous forme d'un pointeau d'ouverture et de fermeture d'un trou de siège pilote axial (18) du clapet pilote (6) débouchant dans l'espace (12) entre les orifices d'entrée et de sortie (O1, O2) et **en ce que** l'espace autour du pointeau communique avec l'orifice d'entrée (O1) par un orifice radial (19) dans le clapet (6) et **en ce que** le clapet comporte une zone clapet (14) coopérant avec un siège (10) du corps de valve (5) pour ouvrir ou fermer le passage d'ouverture de l'espace interne entre les orifices d'entrée et de sortie.

5. Dispositif d'électrovalve selon la revendication 4, **caractérisé en ce que** le clapet pilote (6) comprend au niveau de sa face frontale du côté de l'espace interne (12) entre les deux orifices (O1) et (O2) un embout (20) dont un épaulement annulaire constitue la zone clapet (14) et, en aval de cette zone, en direction de l'intérieur de l'espace intermédiaire, des fentes (21) à travers lesquelles le fluide hydraulique s'écoule dans l'espace intermédiaire (12) lorsque le clapet s'éloigne du siège du corps de valve à l'état de travail de la valve, la géométrie des fentes (21) constituant un moyen du contrôle de la vitesse maximale de descente des charges.

6. Dispositif d'électrovalve selon la revendication 5, **caractérisé en ce que** le clapet pilote (6) est mobile à l'encontre d'un moyen de butée (32) dont le choix constitue également une mesure de contrôle de la vitesse maximale de descente des charges.

7. Dispositif d'électrovalve selon l'une des revendications 1 à 6, **caractérisé en ce que** le tiroir de compensation (8) est monté mobile dans le corps de valve (5) à l'encontre d'un moyen de rappel (33), dans la direction de réduction du débit de l'orifice d'entrée (O1) à l'orifice de sortie (O2) et **en ce que** le tiroir est configuré et disposé de façon qu'il se positionne sous l'effet d'un différentiel de pression dans une position rendant le débit indépendant de la pression à l'orifice d'entrée (O1).

8. Dispositif d'électrovalve selon la revendication 7, **caractérisé en ce que** le différentiel de pression est établi par la pression régnant dans l'espace intermédiaire (12) entre les orifices d'entrée (O1) et de sortie (O2), agissant sur la face frontale interne du tiroir (8), et la pression à l'orifice d'entrée (O1) agissant sur la face frontale externe du tiroir et le ressort de rappel.

9. Dispositif d'électrovalve selon l'une des revendications 1 à 8, **caractérisé en ce qu'**il comprend un mécanisme (44) de commande manuelle de la valve.

10. Dispositif d'électrovalve selon l'une des revendications 1 à 9, **caractérisé en ce qu'**il est adapté pour fonctionner en mode d'alimentation inverse, en l'absence de l'excitation du solénoïde, la valve étant alors complètement ouverte.

11. Dispositif d'électrovalve selon l'une des revendications 1 à 10, **caractérisé en ce que**, dans sa position fermée la valve assure une étanchéité de type clapet au niveau du clapet piloté (6), de l'organe pilote (7) en forme de pointeau pilote et des moyens de balance de pression à clapet intégré, qui accomplit une fonction de retenue de charges.

12. Dispositif d'électrovalve selon l'une des revendications 1 à 11, **caractérisé en ce que** les moyens de balance de pression à clapet intégré, sont disposés en aval de la section variable commandée proportionnellement et **en ce que** cette disposition des moyens de balance avec pilotage par canal interne permettent un passage d'écoulement de fluide hydraulique le plus libre possible entre les orifices d'entrée (O1) et de sortie (O2).

13. Dispositif d'électrovalve selon la revendication 12, **caractérisé en ce que** la section de passage précitée en coopération avec un choix de diamètre optimal du tiroir de compensation (8) constitue un moyen d'optimisation de la perte de charges aux faibles charges en pression pour assurer la réalisation des conditions d'optimisation de la vitesse à vide dans les applications à levage et à descente de charges.

14. Dispositif d'électrovalve selon l'une des revendications 5 à 13, **caractérisé en ce que** les fentes (21) constituent un moyen pour assurer que les pertes de charges que subit l'écoulement du fluide hydraulique entre l'orifice d'entrée (O1) et l'orifice de sortie (O2) à l'état de travail de la valve sont faibles de façon que la vitesse de descente de faibles charges se fasse à une vitesse relativement élevée.

## Patentansprüche

1. Elektroventilvorrichtung, geeignet für die Montage in einem hydraulischen Kreis, mit einem Zylinder für das Anheben und Absenken einer Last, vom Typ Schraubpatrone, aufweisend eine elektrische Basis mit Solenoid und einen hydraulischen Abschnitt, umfassend einen rohrförmigen Ventilkörper (5) mit Eingangs- und Ausgangsöffnungen des hydraulischen Fluids und einen internen Steuerkanal, eine im Ventilkörper axial bewegliche Verschluss- und Öffnungs-Ventilsteuerklappe (6) des Kommunikationskanals, und ein zwischen einer Verschlussstellung des Kanals und einer Öffnungsstellung desselben unter der Wirkung eines Solenoids bewegbares Steuerorgan (7) des Ventils, wobei die Ventilsteuerklappe (6) und das Steuerorgan (7) derart konfiguriert und in den Ventilkörper (5) integriert sind, dass ein variabler Querschnitt mit dichtem Verschluss gebildet wird, der eine mit dem Erregungsstrom des Solenoids (4) eine schrittweise Variation des Durchflusses des hydraulischen Fluids sichert, das zwischen den Eingangs- (O1) und Ausgangsöffnungen (O2) fließt, **dadurch gekennzeichnet, dass** sie einen Ausgleichsschieber (8) mit Klappe umfasst, der derart integriert ist, dass er ein Druckausgleichsmittel bildet, das die Konstanz des Durchflusses unabhängig vom Druck des Fluids am Eingang des Ventils sichert.

2. Elektroventilvorrichtung nach Anspruch 1, **dadurch gekennzeichnet, dass** der Ventilkörper (5) in den Hohlraum eines Mantelkörpers (3) mit drei Kanälen montiert ist, von denen zwei mit den Öffnungen (O1, O2) des Ventilkörpers (5) zusammenarbeiten und deren dritte der internen Steuerung des Ausgleichsschieber (8) dient.

3. Elektroventilvorrichtung nach Anspruch 1 oder 2, **dadurch gekennzeichnet, dass** die Steuerklappe (6) derart konfiguriert und beweglich zwischen dem Ventilkörper (5) und dem Steuerorgan (7) montiert ist, dass, wenn das Ventil durch Anwendung eines Stroms auf den Solenoid (4) in Arbeitsstellung ist, sie sich unter der Wirkung eines Druckdifferentials in eine Gleichgewichtsstellung platziert, die sichert, dass die Durchflussmenge des hydraulischen Fluids zwischen der Eingangsöffnung (O1) und der Ausgangsöffnung (O2) proportional zum Erregungsstrom ist.

4. Elektroventilvorrichtung nach einem der Ansprüche 1 bis 3, **dadurch gekennzeichnet, dass** das Steuerorgan (7) in Form einer Öffnungs- und Verschlussnadel eines axialen Steuersitzlochs (18) der Steuerklappe (6) ausgebildet ist, das in den Raum (12) zwischen den Eingangs- und Ausgangsöffnungen (O1, O2) ausmündet und dass der Raum um die Nadel mit der Eingangsöffnung (O1) durch eine radiale Öffnung (19) in der Klappe (6) kommuniziert und dass die Klappe eine Klappenzone (14) aufweist, die mit einem Sitz (10) des Ventilkörpers (5) zusammenarbeitet, um den Öffnungsdurchgang des inneren Raums zwischen den Eingangs- und Ausgangsöffnungen zu öffnen oder zu schließen.

5. Elektroventilvorrichtung nach Anspruch 4, **dadurch gekennzeichnet, dass** die Steuerklappe (6) im Bereich ihrer frontalen Fläche der Seite des inneren Raums (12) zwischen den zwei Öffnungen (O1) und (O2) eine Spitze (20) umfasst, von der ein ringförmiger Absatz die Klappenzone (14) bildet, und, dieser Zone nachgelagert, in Richtung des Inneren des Zwischenraums, Schlitze (21), durch die das hydraulischen Fluid in den Zwischenraum (12) fließt, wenn sich die Klappe im Arbeitszustand des Ventils vom Sitz des Ventilkörpers entfernt, wobei die Geometrie der Schlitze (21) ein Kontrollmittel der maximalen Geschwindigkeit der Lastabsenkung darstellt.

6. Elektroventilvorrichtung nach Anspruch 5, **dadurch gekennzeichnet, dass** die Steuerklappe (6) gegen ein Anschlagmittel (32) bewegbar ist, dessen Auswahl ebenfalls eine Kontrollmessung der maximalen Geschwindigkeit der Lastabsenkung darstellt.

7. Elektroventilvorrichtung nach einem der Ansprüche 1 bis 6, **dadurch gekennzeichnet, dass** der Ausgleichsschieber (8) in den Ventilkörper (5) gegen ein Rückholmittel (33) in Richtung der Reduzierung des Durchflusses von der Eingangsöffnung (O1) zur Ausgangsöffnung (O2) bewegbar eingebaut ist und dass der Schieber derart konfiguriert und angeordnet ist, dass er sich unter der Wirkung eines Druckdifferentials in einer Position positioniert, bei der der Durchfluss unabhängig vom Druck an der Eingangsöffnung (O1) wird.

8. Elektroventilvorrichtung nach Anspruch 7, **dadurch gekennzeichnet, dass** das Druckdifferential durch den im Zwischenraum (12) zwischen der Eingangs- (O1) und Ausgangsöffnung (O2) herrschenden Druck, der auf die frontale Fläche des Schiebers (8) wirkt, und dem Druck auf die Eingangsöffnung (O1), der auf die externe frontale Fläche des Schiebers und die Rückholfeder wirkt, gebildet ist.

9. Elektroventilvorrichtung nach einem der Ansprüche 1 bis 8, **dadurch gekennzeichnet, dass** sie einen manuellen Steuermechanismus (44) des Ventils umfasst.

10. Elektroventilvorrichtung nach einem der Ansprüche 1 bis 9, **dadurch gekennzeichnet, dass** sie bei keiner Erregung des Solenoids ausgebildet ist, um im umgekehrten Versorgungmodus zu arbeiten, wobei das Ventil dann vollständig geöffnet ist.

11. Elektroventilvorrichtung nach einem der Ansprüche 1 bis 10, **dadurch gekennzeichnet, dass** das Ventil in seiner geschlossenen Stellung eine Dichtigkeit vom Typ Klappe im Bereich der gesteuerte Klappe (6), des Steuerorgans (7) in Form einer Steuernadel und der Druckausgleichsmittel mit integrierter Klappe sichert, die eine Lastrückhaltefunktion erfüllt.

12. Elektroventilvorrichtung nach einem der Ansprüche 1 bis 11, **dadurch gekennzeichnet, dass** die Druckausgleichsmittel mit integrierter Klappe dem variablen, proportional gesteuerten Querschnitt nachgelagert angeordnet sind und dass diese Anordnung der Ausgleichsmittel mit Steuerung durch internen Kanal einen freiestmöglichen Fließdurchgang hydraulischen Fluids zwischen den Eingangs- (O1) und Ausgangsöffnungen (O2) ermöglicht.

13. Elektroventilvorrichtung nach Anspruch 12, **dadurch gekennzeichnet, dass** der vorgenannte Durchgangsquerschnitt im Zusammenarbeit mit einer optimalen Durchmesserauswahl des Ausgleichsschiebers (8) ein Optimierungsmittel des Lastverlusts bei niedrigen Drucklasten darstellt, um bei lasthebenden- und -senkenden Applikationen die Bereitstellung optimierender Vakuumgeschwindigkeitsbedingungen zu sichern.

14. Elektroventilvorrichtung nach einem der Ansprüche 5 bis 13, **dadurch gekennzeichnet, dass** die Schlitze (21) ein Mittel darstellen, um sicherzustellen, dass die Lastverluste beim Fließen des hydraulischen Fluids zwischen der Eingangsöffnung (O1) und der Ausgangsöffnung (O2) im Arbeitszustand des Ventils gering sind, so dass das Absenkens kleiner Lasten mit einer relativ hohen Geschwindigkeit erfolgt.

## Claims

1. An electrovalve system adapted for a hydraulic circuit with a jack for lifting and lowering a load, of the screw cartridge type comprising an electric solenoid base and a hydraulic part comprising a tubular valve body (5) provided with inlet and outlet orifices for the hydraulic fluid and an internal control valve, a valve steering gate (6) for closing and opening the communication channel, axially movable in the valve body, and a member (7) for steering the valve, under the effect of a solenoid, that is movable between a position closing off said channel and a position opening it, the valve steering gate (6) and the steering member (7) being configured and incorporated into the valve body (5) so as to constitute a variable section with tight closing ensuring a gradual variation, with the excitation current of the solenoid (4), of the flow rate of the hydraulic fluid flowing between the inlet (O1) and outlet (O2) orifices, **characterized in that** it comprises a compensating drawer (8) with a gate that is integrated so as to constitute a pressure balance ensuring that the flow rate is constant independently of the fluid pressure at the inlet of the valve.

2. The electrovalve device according to claim 1, **characterized in that** the valve body (5) is mounted in the cavity of a three-way enclosure body (3), two paths of which communicate with the orifices (O1, O2) of the valve body (5) and the third of which is used for inner steering of the compensating drawer (8).

3. The electrovalve device according to claim 1 or 2, **characterized in that** the steering gate (6) is configured and mounted movably between the valve body (5) and the steering member (7) such that, when the valve is in the working position by applying a current to the solenoid (4), it is placed under the effect of a pressure differential, in an equilibrium position ensuring that the flow rate of the hydraulic fluid between the inlet orifice (O1) and the outlet orifice (O2) is proportional to the excitation current.

4. The electrovalve device according to one of claims 1 to 3, **characterized in that** the steering member (7) is made in the form of a needle for opening and closing an axial steering seat hole (18) of the steering gate (6) emerging in the space (12) between the inlet and outlet orifices (O1, O2), and **in that** the space around the needle communicates with the inlet orifices (O1) via a radial orifice (19) in the gate (6), and **in that** the gate comprises a gate zone (14) cooperating with a seat (10) of the valve body (5) to open or close the opening passage for the inner space between the inlet and outlet orifices.

5. The electrovalve device according to claim 4, **characterized in that** the steering gate (6) comprises, at its front face on the side of the inner space (12) between the two orifices (01) and (02), an end-piece (20) whereof an annular shoulder constitutes the gate zone (14) and, downstream from that zone, toward the inside of the intermediate space, slits (21) through which the hydraulic fluid flows into the intermediate space (12) when the gate moves away from the seat of the valve body in the working state of the valve, the geometry of the slits (21) constituting a means for controlling the maximum lowering speed of the loads.

6. The electrovalve device according to claim 5, **characterized in that** the steering gate (6) can be moved against a stop means (32), the choice of which is also a measure for controlling the maximum lowering speed of the loads.

7. The electrovalve device according to one of claims 1 to 6, **characterized in that** the compensating drawer (8) is mounted movably in the valve body (5) against a return means (33), in the direction reducing the flow rate from the inlet orifice (O1) to the outlet orifice (O2), and **in that** the drawer is configured and arranged such that it is positioned under the effect of a pressure differential in a position making the flow rate independent of the pressure at the inlet orifice (O1).

8. The electrovalve device according to claim 7, **characterized in that** the pressure differential is established by the pressure prevailing in the intermediate space (12) between the inlet (O1) and outlet (O2) orifices, acting on the inner front face of the drawer (8), and the pressure at the inlet orifice (O1) acting on the outer front face of the drawer and the return spring.

9. The electrovalve device according to one of claims 1 to 8, **characterized in that** it comprises a mechanism (44) for manual control of the valve.

10. The electrovalve device according to one of claims 1 to 9, **characterized in that** it is able to operate in reverse power supply mode, without excitation of the solenoid, the valve then being completely open.

11. The electrovalve device according to one of claims 1 to 10, **characterized in that**, in its closed position, the valve ensures tightness of the gate type at the steered gate (6), the steering member (7) in the form of a steering needle and pressure balancing means with an integrated gate, which performs a load retaining function.

12. The electrovalve device according of one of claims 1 to 11, **characterized in that** the pressure balancing means with an integrated gate are positioned downstream from the proportionally controlled variable section, and **in that** this arrangement of the balance means with steering by inner channel allows as free as possible a passage of a flow of hydraulic fluid between the inlet (O1) and outlet (O2) orifices.

13. The electrovalve device according to claim 12, **characterized in that** the aforementioned passage section, in cooperation with an optimal diameter choice of the compensating drawer (8), constitutes means for optimizing the pressure drop with low-pressure loads to ensure optimization conditions for the empty speed in load lifting and lowering applications.

14. The electrovalve device according to one of claims 5 to 13, **characterized in that** the slits (21) constitute means for ensuring that the pressure losses experienced by the flow of the hydraulic fluid between the inlet orifice (O1) and the outlet orifice (O2) in the working state of the valve are low, such that the lowering speed for small loads is relatively high.
